# EUROPÄISCHE PATENTSCHRIFT

(11) **EP 2 241 400 B1**
(45) Veröffentlichungstag und Bekanntmachung des Hinweises auf die Patenterteilung: **06.06.2012**
(21) Anmeldenummer: 10000146.0
(22) Anmeldetag: 11.01.2010
(51) Int. Cl.: B23Q 1/03

(54) **Trägereinrichtung**
Holding device
Dispositif de support

(30) Priorität: 17.04.2009 DE 102009017856
(43) Veröffentlichungstag der Anmeldung: 20.10.2010
(73) Patentinhaber: IMA Klessmann GmbH Holzbearbeitungssysteme, 32312 Lübbecke (DE)
(72) Erfinder: Schürmann, Ralf, 32351 Stemwede (DE)
(74) Vertreter: Schober, Mirko

(56) Entgegenhaltungen:
- WO-A1-02/068150
- US-A1- 2002 070 491

## Beschreibung

Die Erfindung betrifft eine Trägereinrichtung nach dem Oberbegriff des Anspruchs 1.

Entsprechende Einrichtungen werden zum Beispiel in Holzbearbeitungsmaschinen eingesetzt, um die Auflage von Werkstücken wie Holzplatten zu ermöglichen. Je nach Größe und Bearbeitungsprogramm lassen sich entsprechende Träger auf einem Tisch verfahren. Jeder Träger weist dabei Spannvorrichtungen wie Saugspanner auf, die auf einem Schlitten auf dem Träger angeordnet und entlang seiner Längserstreckung verschieblich sind. Die Verschiebung erfolgt im einfachsten Fall von Hand, kann aber auch automatisiert sein.

In DE 199 21 048 C1 ist ein entsprechender Werkstückspanntisch beschrieben, bei welchem die die Auflagen tragenden Schlitten längs des Trägers über einen elektromotorischen Linearantrieb verstellt werden, wobei jeder Schlitten einen Stator darstellt und der Träger als damit wechselwirkender Rotor ausgebildet ist. Ebenso können auch mit Spannvorrichtungen versehene Schlitten über Spindeln (DE 43 37 739) oder durch an jedem Schlitten vorgesehene Getriebemotoren angetrieben werden.

Die bekannten Lösungen sind verhältnismäßig teuer und erfordern besonders bei an jedem Schlitten vorzusehenden Antriebseinheiten sehr viel Bauraum.

Der Erfindung liegt daher die Aufgabe zugrunde, die Einrichtung der eingangs genannten Art günstiger und platzschonend auszubilden.

Gelöst wird diese Aufgabe mit den Merkmalen des Anspruchs 1. Vorteilhafte Ausführungsformen finden sich in den Unteransprüchen.

Erfindungsgemäß ist der Schlitten, auf dem etwa ein Saugspanner oder dergleichen angeordnet werden kann, mit einem Verstellelement magnetisch koppelbar ausgebildet. Das Verstellelement ist in einem bevorzugt als Rohr ausgebildeten Hohlkörper verschieblich angeordnet, so dass durch Bewegen des Verstellelements durch die magnetische Kopplung der Schlitten bewegt werden kann. Die Bewegung des Verstellelements wird daher durch Druckbeaufschlagung bevorzugt pneumatisch oder hydraulisch erreicht. Bei Anordnung einer Mehrzahl von Schlitten, die am Hohlkörper geführt sind, kann das Verstellelement durch gezieltes Regulieren des relativen Verhältnisses von magnetischer Kopplungskraft zwischen Verstellelement und einem Schlitten gegenüber der durch die Druckbeaufschlagung auf das Verstellelement wirkenden Kraft so bewegt werden, dass die magnetische Kopplungskraft zwischen einem fixierten Schlitten und dem Verstellelement überwunden wird. So kann das Verstellelement zum nächsten oder einem beliebigen weiteren Schlitten weiterbewegt werden, um diesen zu verschieben. Die Regulierung kann entweder durch Verstärkung des auf das Verstellelement wirkenden Druckes oder/und Absenken der magnetischen Kopplungskraft zwischen Schlitten und Verstellelement bewirkt werden. Bevorzugt wird die magnetische Kopplung durch wenigstens einen Elektromagneten erzielt.

Durch die vorliegende Erfindung wird eine kostengünstige Positioniermöglichkeit der Schlitten von Trägereinrichtungen geschaffen.

Die Erfindung wird nachfolgend anhand der Figuren 1 bis 3 schematisch näher erläutert.
Figur 1 zeigt eine perspektivische Darstellung einer erfindungsgemäßen Trägereinrichtung.
Figur 2 zeigt eine Querschnittdarstellung der in Figur 1 gezeigten Einrichtung.
Figur 3 zeigt einen Längsschnitt durch den das Verstellelement aufnehmenden Hohlkörper.

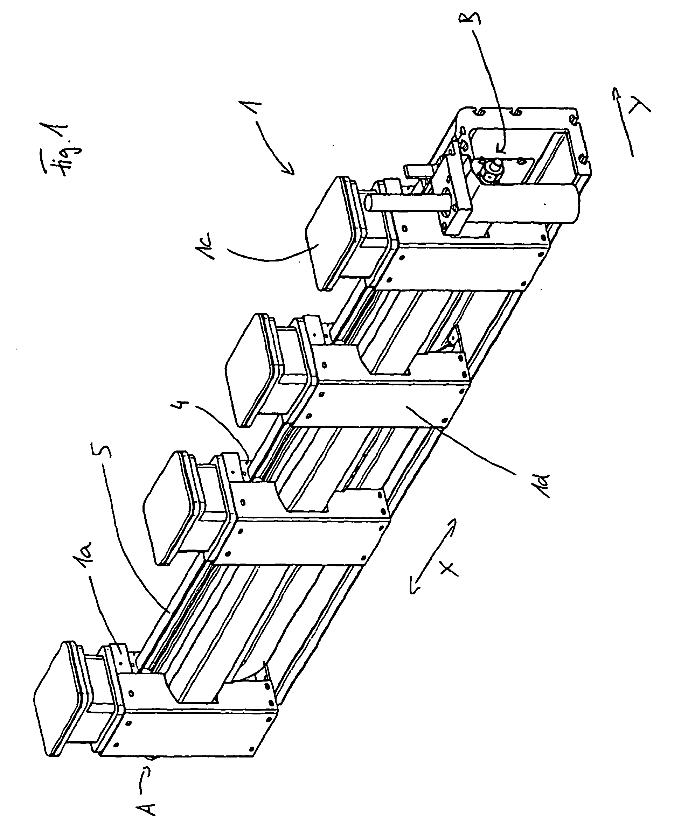

In Figur 1 ist eine erfindungsgemäße Trägereinrichtung gezeigt, welche in der Regel als eine von mehreren solcher Einrichtungen auf einem Werkzeugspanntisch (nicht gezeigt) in Richtung Y verschieblich gelagert sein kann. Die Trägereinrichtung weist wenigstens ein Auflageelement 1 auf, welches an der Trägereinrichtung verschieblich in X-Richtung, d.h. im Wesentlichen in Längsrichtung der Trägereinrichtung geführt ist. Das Auflageelement 1 dient zum Auflegen eines in der Regel plattenförmigen Werkstücks (nicht gezeigt). Zur Fixierung des Werkstücks weisen die Auflageelemente 1 in der Regel Saugspanneinrichtungen 1c auf, welche nach dem Auflegen des Werkstücks evakuiert werden und das Werkstück festhalten.

Je nach gewünschter Position des Auflageelements 1 kann dieses an der Trägereinrichtung verstellt werden. Zur Fixierung an der Trägereinrichtung ist bevorzugt eine Klemmschiene 5 vorgesehen, an welcher das Auflageelement 4 mittels einer Klemmvorrichtung 4 festgeklemmt werden kann. Das Auflageelement 1 weist einen an der Trägereinrichtung verschieblichen Schlitten 1a auf, an welchem sich im gezeigten Beispiel auch die Klemmvorrichtung befindet.

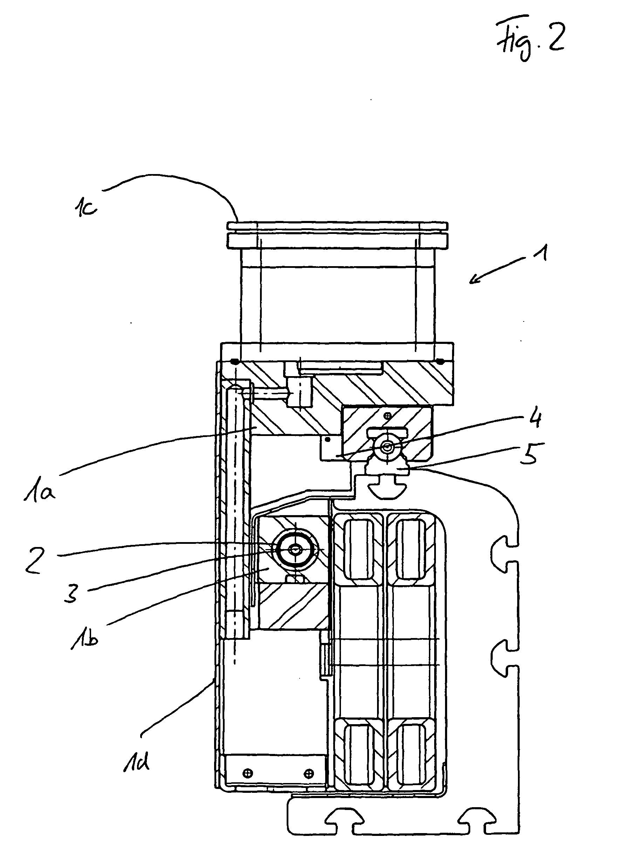

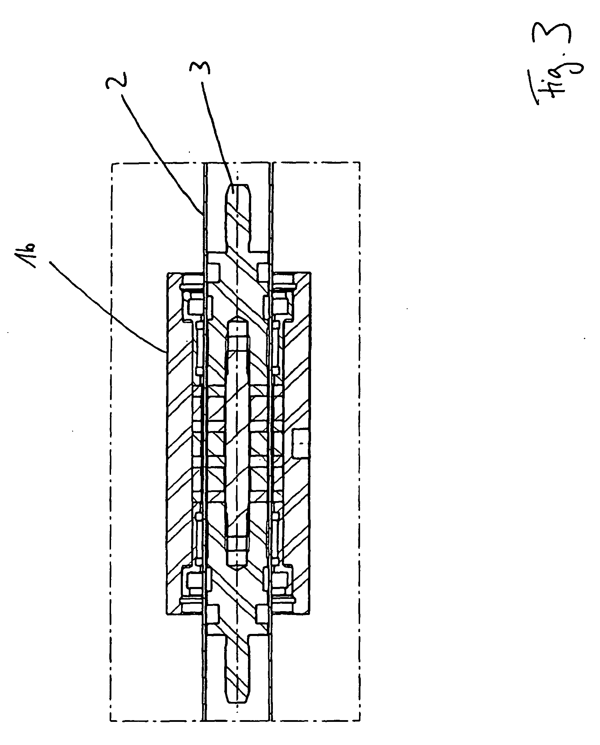

Die Funktionsweise der erfindungsgemäßen Vorrichtung wird nachfolgend anhand der Figuren 2 und 3 näher erläutert, auf welche gleichermaßen Bezug genommen wird.

In Figur 2 ist eine Querschnittansicht durch die erfindungsgemäße Trägereinrichtung dargestellt. Der die Klemmvorrichtung 4 und das Auflageelement 1 mit der Spanneinrichtung 1c tragende Schlitten 1a ist mit einem als 1b bezeichneten Kopplungsabschnitt an einem bevorzugt als zylindrisches Rohr ausgebildeten Hohlkörper 2 geführt. Der Kopplungsabschnitt 1b ist magnetisierbar, permanent oder elektromagnetisch ausgebildet und kann in dieser Eigenschaft mit einem ebenfalls magnetisierbar, permanent oder elektromagnetisch ausgebildeten Verstellelement 3 zusammenwirken, welches bevorzugt an das Querschnittsinnenprofil des Hohlkörpers 2 angepasst und in diesem untergebracht ist. Bei vorliegender magnetischer Kopplung und gelöster Klemmverbindung zwischen den beiden Teilen 4 und 5 bewirkt eine Verschiebung des Verstellelements 3 eine Bewegung des Schlittens 1a oder umgekehrt eine Verstellung des Schlittens 1c eine Verstellung des Verstellelements 3. Zur Kaschierung des Antriebs ist eine Abdeckung vorgesehen, die hier durch das Bezugszeichen 1d angedeutet ist.

Erfindungsgemäß können eine Mehrzahl Schlitten 1a bzw. Auflageelemente 1 mit lediglich einem Verstellelement 3 einzeln und unabhängig voneinander verstellt und angesteuert werden. Das Verstellelement 3 wird hierzu mit einer Kraft beaufschlagt, bei der es sich bevorzugt um eine in erster Linie in Richtung Y auf das Verstellelement 1 wirkende Druck- oder Sogkraft handelt. Diese kann etwa durch eine Stange, bevorzugt jedoch pneumatisch oder hydraulisch wirken. Hierzu wird der Hohlkörper 2 bevorzugt mit einem fluiden Medium, im einfachsten Fall Druckluft, beaufschlagt. Die Beaufschlagung ist in beide Verstellrichtungen möglich. Im einfachsten Fall erfolgt die Beaufschlagung durch einen im Bereich der Stirnenden A, B (vgl. Figur 1) des Hohlkörpers 2 in diesen eingeleiteten Druck auf ein Druckmedium. Hierdurch wirkt eine Kraft auf das Verstellelement 3, so dass das Verstellelement 3 entlang der von der Kraft (Druck) ausgeübten Richtung bewegt wird.

Hierbei geschieht nun folgendes: Wenn die magnetische Kopplungskraft zwischen dem Verstellelement 3 und dem Schlitten 1a größer ist als die durch die Druckbeaufschlagung auf das Verstellelement 3 wirkende Kraft, folgt der Schlitten 1a der Bewegung des Verstellelements 3, sofern die Fixierung zwischen dem Schlitten 1a (im gezeigten Beispiel durch die Klemme 4 an der Klemmschiene 5) nicht stark genug, d.h. nicht größer als die durch die Druckbeaufschlagung ausgeübte Kraft ist. Ist der Schlitten 1a in diesem Sinne ausreichend fixiert, kann die Verstellung des Ver-stellelements 3 einen fixierten Schlitten 1a nicht mitnehmen.

In diesem Fall kann lediglich das Verstellelement 3 allein im Hohlkörper 2 bewegt werden, wenn die durch die Druckbeaufschlagung auf das Verstellelement 3 wirkende Kraft größer ist, als die magnetische Kopplungskraft zwischen Verstellelement 3 und einem Schlitten 1a (bzw. eines magnetischen Teils 1b desselben).

Soll nun ein anderer Schlitten 1a mittels des Verstellelements 3 verstellt werden, muss das Verstellelement 3 aus der magnetischen Kopplung mit dem gegenwärtig in Kopplung befindlichen Schlitten 1a gelöst werden. Dieser Eingriff wird erfindungsgemäß dadurch gelöst, dass die magnetische Kopplungskraft zwischen dem betreffenden Schritten kleiner wird als die auf das Verstellelement 3 wirkende Kraft der pneumatischen, hydraulischen oder sonstigen Beaufschlagung. Bevorzugt wird die Kraft der magnetischen Kopplung um ca. 25 % reduziert. Dies kann zum einen erreicht werden durch Senken der magnetischen Kopplungskraft zwischen den magnetischen Teilen 1b und 3 und/oder Erhöhen des auf das Verstellelement 3 in Richtung X wirkenden Druckes. Nach Überwinden der magnetischen Kopplungskraft (die magnetischen Teile 1b und 3 können auch als Elektromagnete ausgebildet sein) wird das Verstellelement 3 in Richtung X im Hohlkörper bewegt und gelangt in den Anzugsbereich eines magnetischen Teils 1b eines anderen Schlittens. Soll dieser Schlitten 1a bewegt werden, wird die Fixierverbindung zwischen dem zugehörigen (Klemm-)Teil 4 und der Klemmschiene 5 gelöst, so dass das sich bewegende Verstellelement 3 den gelösten Schlitten 1a mitnehmen kann. Dazu muss die magnetische Kopplungskraft groß genug sein, damit der mitzunehmende Schlitten 1a nicht aufgrund seiner Reibungs- oder Gewichtskraft stockt. Für den mitzunehmenden Schlitten 1a kann mittels einer nicht gezeigten Positionierungseinrichtung die Endposition vorgeben werden. Bei Erreichen der Endposition wird der Fixiermechanismus 4, 5 wieder aktiviert und ggf. die magnetische Kopplung reduziert oder ausgekoppelt und es kann ggf. ein weiterer Schlitten 1a verstellt werden.

## Patentansprüche

1. Trägereinrichtung, insbesondere zur Auflage oder/und Fixierung von Werkstücken, mit wenigstens einem Auflageelement (1), welches entlang der Trägereinrichtung mittels eines Schlittens (la) verschieblich geführt und in verschiedenen Positionen fixierbar ausgebildet ist, wobei eine Antriebseinrichtung zum Bewegen des Schlittens (1a) vorgesehen ist, wobei eine Fixiereinrichtung (4) vorgesehen ist, mittels derer die Schlitten (1a) an der Trägereinrichtung fixiert werden können,
**dadurch gekennzeichnet,**
**dass** der Schlitten (la) auf einem sich in Längsrichtung (X) der Trägereinrichtung erstreckenden Hohlkörper (2) verschieblich gelagert ist, wobei im Inneren des Hohlkörpers (2) ein durch Druck beaufschlagbares Verstellelement (3) verschieblich geführt und dazu ausgelegt ist, den Schlitten (1a) über eine magnetische Kopplung zu bewegen, wobei die zwischen Schlitten (la) und Verstellelement (3) wirksame magnetische Kopplungskraft oder/und die durch Druckbeaufschlagung auf das Verstellelement wirkende Druckkraft so einstellbar sind, dass die durch Druckbeaufschlagung wirkende Kraft auf das Verstellelement (3) größer als die magnetische Kopplungskraft ist,

2. Trägereinrichtung nach einem der vorherigen Ansprüche,
**dadurch gekennzeichnet,**
**dass** das Verstellelement (3) kolbenartig ausgebildet ist.

3. Trägereinrichtung nach einem der vorherigen Ansprüche,
**dadurch gekennzeichnet,**
**dass** der Hohlkörper (2) eine hydraulische oder pneumatische Druckbeaufschlagung aufweist.

4. Trägereinrichtung nach einem der vorherigen Ansprüche,
**dadurch gekennzeichnet,**
**dass** eine Mehrzahl Schlitten (la) vorgesehen sind.

5. Trägereinrichtung nach einem der vorherigen Ansprüche,
**dadurch gekennzeichnet,**
**dass** der auf das Verstellelement (3) wirksame Druck regulierbar ist.

6. Trägereinrichtung nach einem der vorherigen Ansprüche,
**dadurch gekennzeichnet,**
**dass** die magnetische Kopplungskraft zwischen Schlitten (1a) und verstellelement (3) regulierbar ist.

7. Trägereinrichtung nach einem der vorherigen Ansprüche,
**dadurch gekennzeichnet,**
**dass** am Schlitten (la) und/oder dem Verstellelement (3) ein Elektromagnet vorgesehen ist.

8. Trägereinrichtung nach einem der vorherigen Ansprüche,
**dadurch gekennzeichnet,**
**dass** sie eine Positionserfassungseinrichtung zur Erfassung der Position eines Schlittens (la) aufweist.

## Claims

1. Support device, more particularly for supporting and/or fixing work pieces, with at least one supporting element (1) which is guided displaceable along the support device by means of a sliding carriage (1a) and is designed so that it can be fixed in various positions, wherein a drive mechanism is provided for moving the sliding carriage (1a), wherein a fixing device (4) is provided by means of which the sliding carriage (1 a) can be fixed on the support device,
**characterised in that** the sliding carriage (1a) is mounted displaceable on a hollow body (2) which extends in the longitudinal direction (x) of the support device, wherein an adjusting element (3) which can be charged with pressure is guided displaceable inside the hollow body (2) and is designed to move the sliding carriage (1a) by way of a magnetic coupling wherein the magnetic coupling force which acts between the sliding carriage (1a) and the adjusting element (3) and/or the compressive force which acts through pressurization on the adjusting element can be adjusted so that the force acting by pressurization on the adjusting element (3) is greater than the magnetic coupling force.

2. Support device according to one of the preceding claims **characterised in that** the adjusting element (3) is designed like a piston.

3. Support device according to one of the preceding claims **characterised in that** the hollow body (2) has a hydraulic or pneumatic pressurization.

4. Support device according to one of the preceding claims **characterised in that** a number of sliding carriages (1 a) are provided.

5. Support device according to one of the preceding claims **characterised in that** the pressure acting on the adjusting element (3) can be regulated.

6. Support device according to one of the preceding claims **characterised in that** the magnetic coupling force between the sliding carriage (1a) and the adjusting element (3) can be regulated.

7. Support device according to one of the preceding claims **characterised in that** an electromagnet is provided on the sliding carriage (1 a) and/or on the adjusting element (3).

8. Support device according to one of the preceding claims **characterised in that** it has a position detection device to detect the position of a sliding carriage (1 a).

## Revendications

1. Dispositif de support, en particulier pour le support ou / et la fixation de pièces à usiner, lequel comprend au moins un élément de support (1), qui est guidé le long dudit dispositif de support, au moyen d'un chariot (1a). et peut être fixé dans différentes positions, un système d'entraînement étant prévu pour le déplacement du chariot (la), sachant qu'est prévu un dispositif de fixation (4), au moyen duquel les chariots (la) peuvent être fixés sur le dispositif de support,
**caractérisé en ce que**
le chariot (la) est monté, mobile, sur un corps creux (2), qui s'étend dans la direction longitudinale (X) du dispositif de support, sachant qu'un élément de déplacement (3), soumis à une pression, est guidé en translation à l'intérieur du corps creux (2) et est conçu pour mouvoir le chariot (la) par l'intermédiaire d'un couplage magnétique, sachant que la force de couplage magnétique, qui agit entre le chariot (la) et l'élément de déplacement (3), ou / et la force de pression, qui agit sur l'élément de déplacement, peuvent être régulées de sorte que la force de pression, agissant sur l'élément de déplacement (3), soit plus forte que la force de couplage magnétique.

2. Dispositif de support selon la revendication 1, **caractérisé en ce que** l'élément de déplacement (3) est configuré en forme de piston.

3. Dispositif de support selon l'une des revendications précédentes, **caractérisé en ce que** le corps creux (2) est soumis à une pression hydraulique ou pneumatique.

4. Dispositif de support selon l'une des revendications précédentes, **caractérisé en ce qu'**une pluralité de chariots (la) est prévue.

5. Dispositif de support selon l'une des revendications précédentes, **caractérisé en ce que** la pression, qui agit sur l'élément de déplacement (3), peut être régulée.

6. Dispositif de support selon l'une des revendications précédentes, **caractérisé en ce que** la force de couplage magnétique entre le chariot (la) et l'élément de déplacement (3) peut être régulée.

7. Dispositif de support selon l'une des revendications précédentes, **caractérisé en ce que**, sur le chariot (la) et / ou sur l'élément de déplacement (3), est prévu un électroaimant.

8. Dispositif de support selon l'une des revendications précédentes, **caractérisé en ce qu'**il présente un détecteur de position pour la détection de la position d'un chariot (la).
